# EUROPEAN PATENT SPECIFICATION

(11) **EP 2 612 415 B1**
(45) Date of publication and mention of the grant of the patent: **30.09.2015**
(21) Application number: 11757202.4
(22) Date of filing: 19.08.2011
(51) Int. Cl.: H02J 5/00, B60R 16/027, B64D 11/06

(54) **SYSTEM FOR CONTACTLESS POWER TRANSFER**
SYSTEM FÜR KONTAKTLOSE ENERGIEÜBERTRAGUNG
SYSTÈME POUR UN TRANSFERT D'ÉNERGIE SANS CONTACT

(30) Priority: 01.09.2010 US 378991 P; 01.09.2010 DE 102010036061
(43) Date of publication of application: 10.07.2013
(73) Proprietor: Airbus Operations GmbH, 21129 Hamburg (DE)
(72) Inventor: BAUER, Hans-Achim, 21037 Hamburg (DE); ZYBALA, Andre, 21271 Hanstedt (DE)
(74) Representative: Maiwald Patentanwalts GmbH
(86) International application number: PCT/EP2011/064306
(87) International publication number: WO 2012/028478

(56) References cited:
- WO-A2-2009/106266
- DE-A1-102009 019 994
- US-A1- 2006 202 665
- US-A1- 2009 121 523
- US-A1- 2009 295 223
- US-B1- 6 400 259
- KOICHI HATANAKA ET AL: "Power Transmission of a Desk With a Cord-Free Power Supply", IEEE TRANSACTIONS ON MAGNETICS, IEEE SERVICE CENTER, NEW YORK, NY, US, vol. 38, no. 5, 1 September 2002 (2002-09-01), XP011075385, ISSN: 0018-9464

## Description

### TECHNICAL FIELD

The invention relates to a system for contactless power transfer between a first vehicle part and at least one collector that can be variably positioned relative to the first vehicle part; to a method for the transfer of power between a first vehicle part and at least one collector that can be variably positioned relative to the first vehicle part in a passenger cabin of a vehicle; as well as to an aircraft comprising such a system that can carry out said method.

### BACKGROUND TO THE INVENTION

Systems for power transfer between a vehicle part and a moveable collector are known from the state of the art. In particular for providing re-configurability of a cabin in an aircraft in the most flexible manner possible, frequently seat-to-seat cabling is used for connecting devices in passenger seats to a current network or a data network; and as an alternative also connecting lines from the vehicle floor to passenger seats, galleys or other monuments that are arranged on said vehicle floor.

When cleaning cabins of larger vehicles, for example of commercial aircraft, vacuum cleaners, steam cleaners, carpet shampooing appliances and other cleaning appliances can be used which need to be supplied on board with electric current. To this effect, electrical outlets can be provided in the passenger cabin, which electrical outlets are firmly connected to conventional vehicle cabling, and in the case of a commercial aircraft after landing, when the vehicle is situated on the ground, supply the respective appliances with power only when a service switch is activated, which service switch is specially provided for this and is located in the entrance region of front doors. Special protection mechanisms, e.g. fault-current circuit breakers, protect the user against injury or death in the case of malfunction. Such conventional cabling is disadvantageous, especially in the case of aircraft, as a result of its increased weight.

Patent applications DE 10 2008 024 217 A1 and US 2009/295223 A1 disclose a system for contactless inductive transfer of data and power between a first vehicle part and a second vehicle part by means of transducers formed by primary windings and secondary windings, which system relates to the provision of a power supply to devices and equipment in passenger seats or other second vehicle parts, while at the same time it also makes it possible to transfer a data flow that is high-frequency-modulated on the present alternating voltage. The second vehicle parts that are supplied with power and data can be arranged at various locations within the passenger cabins, without there being any need for modification of elaborate seat-to-seat cabling.

US 2006/202665 A1 discloses an inductive powering device providing power to a portable device via inductive coupling between primary coils in the surface of the powering device and a secondary coil in the portable device.

### PRESENTATION OF THE INVENTION

Accordingly, it is the object of the invention to propose a system for power transfer in a passenger cabin of a vehicle, which system is as lightweight as possible, while nevertheless without expensive modification work to existing systems provides for a reliable supply of power to devices that are brought on board, in particular to cleaning appliances and maintenance equipment.

This object is met by a system for contactless power transfer between a first vehicle part and at least one collector that is variably positionable relative to the first vehicle part in a passenger cabin of a vehicle, which system comprises a first control unit with a voltage input and at least one primary voltage output; a multitude of primary windings that can be positioned on the first vehicle part, which primary windings can be connected to the primary voltage output of the first control unit; a second control unit with a secondary voltage input and a voltage output; and a secondary winding arranged on the collector, which secondary winding can be connected to the secondary voltage input of the second control unit. The collector is positionable in such a manner relative to the primary windings that between the secondary winding and a primary winding a transducer is formed for inducing a voltage from the primary winding to the secondary winding and thus for the transfer of electrical power from the first control unit to the second control unit.

According to the invention the collector is a voltage provision unit with a connection for supplying external electrical loads, and the first control unit is connected to an operating-mode switching device that is equipped, in an operating mode of the vehicle, to interrupt the connection between those primary windings and the first control unit, which primary windings form a transducer with a secondary winding of the voltage provision unit.

The essential aspects of the system according to the invention thus consist of forming transducers in a location-variable manner by means of primary windings and secondary windings, which transducers are able to transfer electrical power in a contactless manner, by induction, from primary windings to secondary windings. Generally speaking, the basic design is already known from the printed publication, mentioned in the introduction, DE 10 2008 024 217 A1. The system according to the invention could thus be designed as a power transfer and data transfer system in which second vehicle parts can be arranged on the first vehicle part, where between corresponding primary windings and secondary windings they form transducers for the transfer of power and data. The second vehicle parts could, for example, be passenger seats on which secondary windings are arranged. The first control unit could comprise a modulation device that allows high-frequency modulation of data flows on a voltage to be induced, wherein at the same time in the second vehicle parts second control units can be arranged which by means of a corresponding demodulation device convert the data modulated on the induced voltage back to usable data flows. According to the invention, for this purpose in addition further collectors can also be positioned on the first vehicle part, which collectors are designed as voltage provision units that make it possible to operate devices for cleaning or maintenance, which devices are used on-board the vehicle, wherein a safety function is implemented by the operating-mode switching device, which safety function prevents inadvertent operating during a predetermined operating mode, i.e. in particular during passenger transport.

The voltage provision unit is preferably a compact, lightweight, easily portable design unit which during maintenance or cleaning can be brought into the vehicle cabin where it can be positioned relative to the first vehicle part when required. As an alternative to the above, said design unit could also be locked to the first vehicle part during conventional aircraft operation. The voltage provision unit could thus be considered to be a "mobile electrical outlet" that could comprise a mounting frame with a locking unit that makes possible locking, for example on a commonly used seat rail with a one-inch pitch, and that can be affixed completely variably within the cabin or relative to the first vehicle part, and that can be affixed practically to any location that comprises primary windings, thus providing a connection for electrical loads.

The system according to the invention comprises a safety device, in the form of the operating-mode switching device, which safety device prevents inadvertent activation of the voltage provision unit. This is advantageous in particular in those cases where a voltage provision unit after cleaning or maintenance on board the vehicle is forgotten, and its secondary winding forms a transducer with a primary winding even during conventional passenger conveyance operations. By means of interrupting the supply to this primary winding, potential malfunction or error sources of an electrical system or danger to passengers can be prevented.

The type of operating-mode switching device can be implemented in various ways, for example in the form of a mechanical switch which can disconnect, from the first control unit, predetermined primary windings that are provided for operating voltage provision units. As an alternative to this, an electronics unit is also imaginable in which signaling a passenger-conveyance operating mode switches off the corresponding primary voltage outputs.

In an advantageous embodiment the first control unit comprises a group of first primary voltage outputs and a group of second primary voltage outputs, wherein the operating-mode switching device comprises an operating-mode signal input and is designed to connect the group of second primary voltage outputs to the primary windings, or to disconnect these connections. By dividing the primary voltage outputs into two different groups, combined with the evaluation of a signal present at the operating-mode signal input, two states can be switched by operating or disconnecting the group of second primary voltage outputs, and in this manner two operating modes can be considered which are predetermined by the signal at the operating-mode signal input. The group of first primary voltage outputs could, for example, be connected to primary windings which with secondary windings of second vehicle parts form transducers that are connected to second control units of passenger seats or other second vehicle parts. The group of second primary voltage outputs could be connected to primary windings that relate to the operation of voltage provision units. Activation of the second primary voltage outputs can consequently be prevented in the conventional passenger conveyance operation of the vehicle in that a service switch or a corresponding signal from a control computer of the vehicle indicates passenger conveyance operation. It should be pointed out that operation of the group of second primary voltage outputs does not necessarily lead to parallel disconnection of the group of first primary voltage outputs. Instead, it is imaginable, in particular during short stays for cleaning the vehicle without passengers present therein, not to switch off the devices installed in the second vehicle parts, which devices are supplied with power, and optionally also with data, by the group of first primary voltage outputs.

The above-mentioned decoupling of groups of primary voltage outputs could implicitly also mean that on the first vehicle part special primary windings can be provided for the purpose of in each case forming a transducer exclusively with secondary windings of voltage provision units. Accordingly, in this embodiment particular positions within the passenger cabin could be selected on the first vehicle part, at which positions a voltage provision unit is to be arranged. This is sensible in those regions where due to spatial or constructional restrictions it is not possible to arrange passenger seats or monuments, and consequently arranging a mobile electrical outlet appears to be particularly practical.

In an advantageous embodiment the second control unit comprises an identification device, wherein the first control unit is connected to at least one acquisition device that is designed to acquire the identification device of a second control unit that is connected to a secondary winding, which together with a primary winding that is connected to the first control unit forms a transducer. The identification device is preferably equipped on call to transmit identification that allows inference relating to the electrical load concerned, which electrical load is connected to the second control unit. Consequently, by means of identification it would be possible to determine whether at a particular primary winding a transducer is present that leads to a voltage provision unit or some other device that is used during normal vehicle operation. By detecting all the identifications of all the electrical loads situated in proximity to primary windings, the system according to the invention could intelligently react to the respective electrical loads, and in a predetermined operating mode could operate only permitted devices by selectively disconnecting or connecting primary voltage outputs of the first control unit and the respective primary windings. In other words this means that a voltage provision unit with corresponding identification results in impingement of a primary winding, provided for this or located in close proximity, with a primary voltage only in those cases where the operating mode "maintenance" or "cleaning" is present. This embodiment is very flexible, because by means of it a voltage provision unit can be operated practically at any position within the passenger cabin, in which position there is a first vehicle part with primary windings.

Particularly preferably, the operating-mode switching device is equipped, after changeover of a predetermined operating mode, to detect all the available identification devices in order to subsequently adapt the linkage of the primary windings. Manual initiation of this process is then not required.

In a preferred embodiment this identification device is a transponder, wherein the associated acquisition device is a reading device for transponders. Particularly well-known and in widespread use are so-called RFID-transponders that, excited by an external voltage, transmit a predetermined data record, which according to the invention could comprise identification data of a second control device, details relating to the device type, a permitted operating mode, or the like. If transponders are used, preferably each primary winding comprises a corresponding reading device, or is equipped or adapted to be connected to a central reading device.

In an advantageous embodiment the identification device is adapted to induce recognizable response behavior in a primary winding, and the first control unit is designed to measure this response behavior. Modification of a response behavior, i.e. of a current/voltage profile over time, in a transducer is possible based on Lenz's law or mutual inductance behavior on the primary winding, and a correspondingly modified response signal could be distinguishable from other response behavior. It is thus imaginable, in the case of cleaning or maintenance, to exclusively permit operation of such second control devices that are connected to secondary windings which in a particular manner cause modified response behavior in a transducer.

In an advantageous embodiment, by applying an impedance, a capacitance and/or a resistance to the secondary winding, a particular response behavior of a transducer could be modified, which response behavior can be determined by means of a measuring device and can be differentiated from other response behavior.

In a likewise preferred embodiment of the system according to the invention, the first control unit is designed, by means of the primary voltage outputs, at each primary winding to check whether a transducer with a secondary winding is formed. By measuring the response behavior following a voltage pulse or the like, the first control unit can detect whether a transducer with a secondary winding is present, which can be determined for example by the presence of a significantly higher measurable amperage than is the case in the absence of a secondary winding. The system according to the invention would then preferably connect only the primary windings permanently to the primary voltage outputs of the first control unit, which primary windings form a transducer with a secondary winding, in each case depending on the present operating mode. In this manner, the electrical dissipation resulting from primary windings that are not required can be eliminated, which results in overall optimization of the required electrical power.

In a furthermore advantageous embodiment, by means of modulated-on high-frequency alternating voltage signals between the primary winding and the secondary winding of a transducer, a half-duplex data connection can be established, by way of which it is possible for a first control unit to send an identification query to the second control unit, wherein within a predetermined waiting time, a response to said query, from the second control unit, can be issued in the form of an identification data record.

Furthermore, according to a preferred embodiment, the first control unit is connected to a checking device that is designed to check whether a vehicle-external voltage supply is available. This makes it possible for the system according to the invention, and in particular for the first control unit, to deactivate an on-board voltage supply for supplying the primary windings so that, for example in the case of complete switch-off of equipment units or engines of the vehicle, no interruption to the voltage supply on a primary winding connected to a primary voltage output occurs. Moreover, an external voltage supply is frequently less expensive than an on-board voltage supply.

### BRIEF DESCRIPTION OF THE DRAWINGS

Further features, advantages and application options of the present invention are disclosed in the following description of the exemplary embodiments and of the figures. All the described and/or illustrated characteristics per se and in any combination form the subject of the invention, even irrespective of their composition in the individual claims or their interrelationships. Furthermore, identical or similar components in the figures have the same reference characters.
Fig. 1 shows an isometric view of a first vehicle part with primary windings arranged therein.
Fig. 2 shows a diagrammatic view of a system according to the invention.
Fig. 3 shows an exemplary embodiment of a second control unit.
Fig. 4 shows an aircraft comprising a cabin and a system arranged therein.
Fig. 5 shows a diagrammatic block-based view of a method according to the invention.

### DETAILED DESCRIPTION OF EXEMPLARY EMBODIMENTS

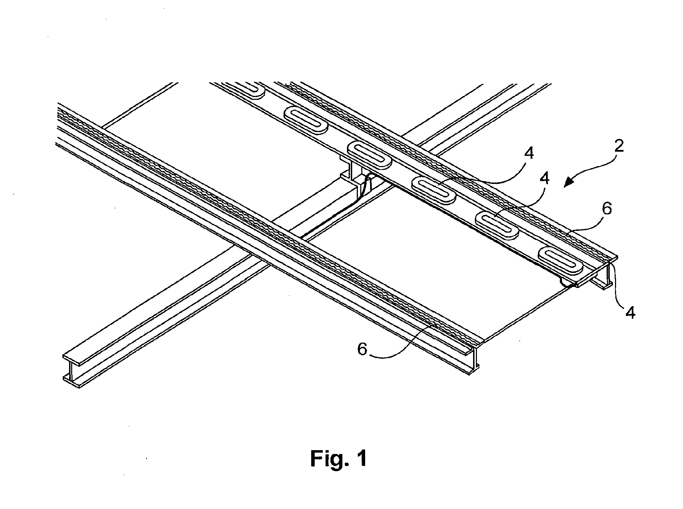

Fig. 1 shows an isometric view of a first vehicle part 2 that comprises a multitude of primary windings 4 that as an example are elongated and arranged so as to be equidistant from each other. In the illustration shown, the first vehicle part 2 is designed as part of a cabin floor of a vehicle, which cabin floor comprises seat rails 6 on which passenger seats, monuments or other equipment units can be positioned, preferably with a one-inch pitch. The illustration of Fig. 1 is to be interpreted only as an example; in principle it would also be possible for a seat rail 6 itself to comprise several primary windings 4; as an alternative to this also wall surfaces, in close proximity to the floor, of a cabin interior lining, or other aircraft parts installed in the cabin.

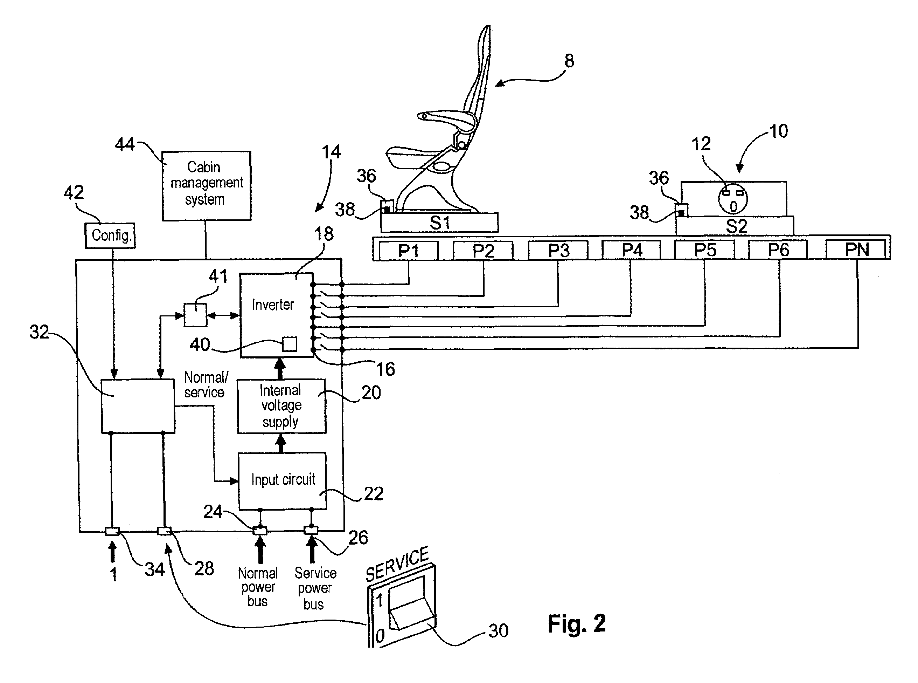

Fig. 2 diagrammatically shows a series of primary windings 4 that are designated P1, P2, P3, P4, P5, P6 and PN. On two primary windings, P1 and P2, a second vehicle part 8 in the form of a passenger seat is arranged, at the bottom of which a secondary winding S1 is arranged. The secondary winding S1 forms a transducer with the primary winding P1, but it cannot entirely cover the adjacent primary winding P2, and consequently in that location no complete transducer is formed. On two primary windings P5 and P6, which are spaced apart along the floor, a collector in the form of a voltage provision unit 10 is arranged that at it bottom comprises a secondary winding S2 that forms a transducer with the primary winding P5, but does not form a complete transducer with the adjacent primary winding P6. The voltage provision unit 10 is designed as a kind of mobile electrical outlet and comprises a connection 12 for connecting external devices that are supply with voltage by way of the transducer formed from S2 and P5. It would thus be desirable to connect the inverter 18 to the primary voltage outputs 16 that lead to the primary windings P1 and P5, wherein, in order to save power, the remaining primary windings P2-P4 and PN should not be connected to the primary voltage outputs 16. Further below, a modification of the circuit arrangement is shown, which modification depends on the operating mode.

Furthermore, a first control unit 14 is shown, which comprises a series of primary voltage outputs 16 that can be connected to the individual primary windings P1-PN. The primary voltage outputs 16 derive from an inverter 18, which from an incoming direct voltage generates an alternating voltage of a frequency suitable for transmission to a secondary winding S1 or S2.

For operation of the first control unit 14 an internal voltage supply unit 20 is provided which from a so-called input circuit 22 provides a voltage suitable for the function. In the example shown, the input circuit 22 comprises two connections 24 and 26 for voltage supplies that in a commercial aircraft can be connected to two different electrical line networks, e.g. to a "normal power bus" and to a "service power bus". The input circuit 22 is preferably designed to check whether and what external voltage supply is available at a given time. The "service power bus" is, for example, used when service or maintenance work is carried out on the aircraft and when flight-relevant systems are switched off.

In addition to this, the first control unit 14 comprises an operating-mode signal input 28 at which, for example, the switching state of a service switch 30 can be acquired. If said service switch 30 is in the position "1" or "service" an operating-mode switching device 32 causes the voltage provision unit to be supplied with electrical power by way of the primary winding P5. In contrast to this, if the service switch 30 is in the position "0" or "normal operation", then the operating-mode switching device 32 causes the connection between the respective primary voltage output 16 and the primary element P5 to be interrupted.

The first control unit 14 further comprises a ground contact signal input 24, which is connected to the operating-mode switching device 32, in order to check, for example in the case of evaluation of a ground sensor arrangement of an aircraft, a park position sensor of a train, of a bus, of a ferry or of some other vehicle, as well as a corresponding position of the service switch 30, whether engines or equipment units have been started up, whether the system according to the invention has been set back to a normal operating state or whether an operating mode required for cleaning and service can be activated by means of the operating-mode switching device 32.

The secondary windings S1 and S2 are in each case connected to a second control unit 36 which makes it possible to process the transferred electrical power for the intended electrical loads, for example to the passenger seat 8 or the voltage provision unit 10. At the same time a second control unit 36 can comprise an identification device 38 which is able, upon request, to convey an identification data record to the first control unit 14. This can be carried out with data transfer by way of the transducers formed with S1 and P1 or S2 and P5, wherein for this purpose modulation and demodulation units (not shown in detail) can be used. On the other hand, it is also possible to use transponders and corresponding reading devices for this purpose.

The first control unit is preferably equipped, by applying a short voltage pulse by way of the primary voltage outputs 16 and by measuring a signal response by means of a measuring device 40, to detect on all primary windings whether a secondary winding S1 or S2 forms a transducer with a primary winding P1 to PN. In the case shown, the result of this would show the transducer formed from P1 and S1 as well as P5 and S2. At the respective primary windings P1 and P5 preferably a subsequent check takes place as to which device type is present on S1 or S2 in that the identification data sent by the identification devices 38 is queried by an acquisition device 41, which as an example is connected to the operating-mode switching device 32, which as an example by means of a demodulator receives the modulated-on identification data sent by way of a transducer or some other data transfer means.

After the respective information has been received, the operating-mode switching device 32 is in a position, based on the state represented by the service switch 30 and optionally the signal on the ground contact signal input 34, to initiate or prevent operation of P1 and P5. In the case shown, the service switch 30 is in the position "1", while on the ground contact signal input 34 likewise a "1" is present. This signifies the operating mode "service", and that the vehicle is not in passenger transport mode so that the primary winding P5 can be supplied with voltage from the corresponding primary voltage output 16. The connection 12 thus provides a voltage for operating an external device. At the same time, due to the presence of a transducer on P1, operation of the primary winding P1 is initiated. The switches, in the diagram shown on inverter 18, are thus open, except for the switches leading to P1 and P5.

In order to take into account possibly changing identification data from identification devices 38 a configuration unit 42 can be used that comprises updated identification data and associated operating modes.

At the same time a central cabin management system 44 can establish a connection with the first control unit 14 in order to, by way of cabin attendant input via a so-called "cabin attendant panel", vehicle operator input or vehicle state data, transmit a current status to the operating-mode switching device 32.

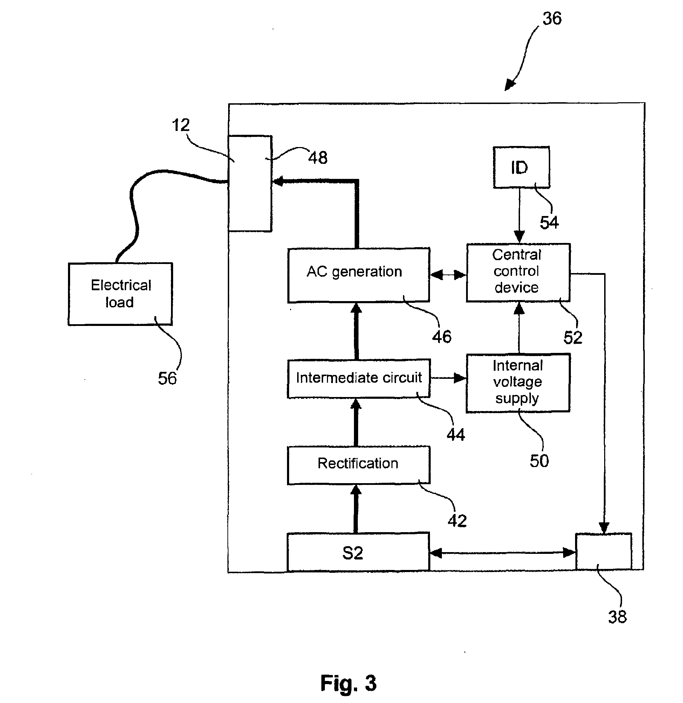

Fig. 3 as an example shows a second control unit 36 that is connected to the secondary winding S2 and comprises a downstream rectifier 42, an intermediate circuit 44 as well as an inverter 46 that feeds a voltage of a suitable frequency to the connection 12 for operating an electrical load 56. The intermediate circuit 44 can be connected to an internal voltage supply 50 that supplies a voltage to a central control device 52 within the second control unit 36, with the aforesaid furthermore also comprising a device 54 for storing and providing an identification data record so that by way of the identification device 38 the voltage provision unit 10 can indeed be identified as such.

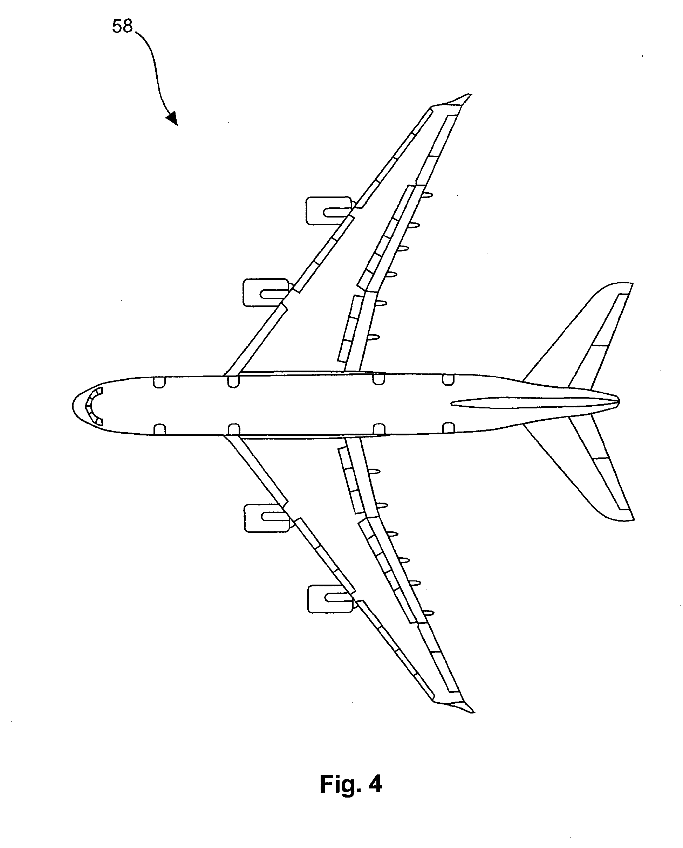

Fig. 4 shows an aircraft 58 that comprises a passenger cabin 60 with at least one system installed therein.

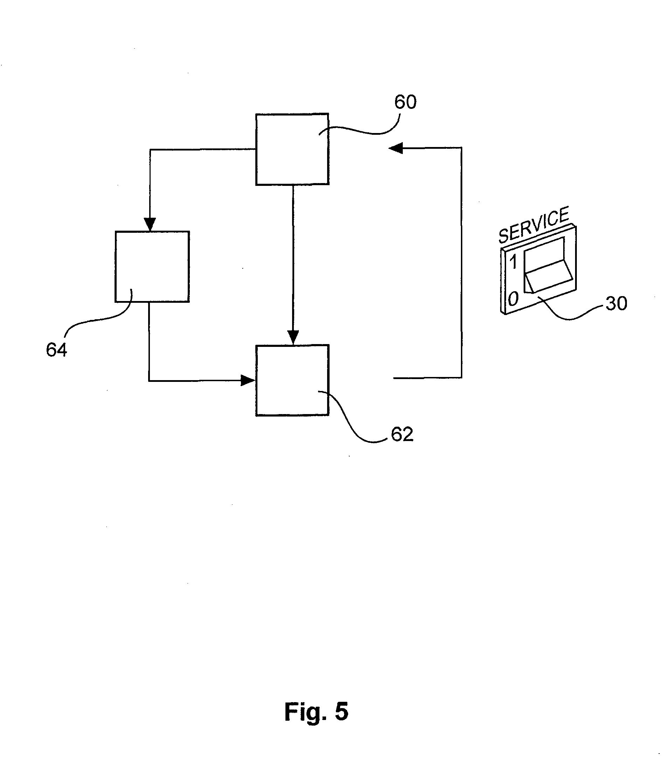

Fig. 5 in a diagrammatic block-based view shows a method that commences with checking 60 as to which primary windings form a transducer with secondary windings, and depending on an operating state disconnects 62 connections between primary voltage outputs 16 and primary windings P1 to PN, which connections together with secondary windings S1 and S2 form a transducer, which are connected to electrical loads that in the then present operating mode must not be operated. Optionally, identification devices 38 are queried 64 in order to obtain identification data from electrical loads, which identification data allows inference as to their type. After activation of an operating-mode switch 30 or after changing the operating mode, the method could be implemented once more.

In addition, it should be pointed out that "comprising" does not exclude other elements or steps, and "a" or "one" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. A system for contactless power transfer between a first vehicle part (6) and at least one collector (10) that can be variably positioned relative to the first vehicle part in a passenger cabin of a vehicle, comprising
- a first control unit (14) with a voltage input (24, 26) and at least one primary voltage output (16),
- a multitude of primary windings (P1-PN) that can be positioned on the first vehicle part, which primary windings can be connected to the primary voltage output (16) of the first control unit (14),
- a second control unit (36) with a secondary voltage input,
- a secondary winding (S2), arranged on the collector (10), which secondary winding (S2) can be connected to the secondary voltage input of the second control unit (36),
wherein the collector (10) can be positioned in such a manner relative to the primary windings (P1-PN) that between the secondary winding (S2) and a primary winding (P1-PN) a transducer is formed for transferring a voltage from the primary winding (P1-PN) to the secondary winding (S2),
**characterized in that** the collector (10) is a voltage provision unit with a connection (12) for supplying external loads, and
that the first control unit (14) is connectable to an operating-mode switching device (32) that is equipped, during operation of the vehicle, to interrupt the connection between those primary windings (P1-PN) and the primary voltage output (16) which form a transducer with a secondary winding of the collector (10).

2. The system of claim 1,
**characterized in that** the first control unit comprises a group of first primary voltage outputs (16) and a group of second primary voltage outputs (16), wherein the operating-mode switching device (32) comprises an operating-mode signal input (34) and is designed to connect the group of second primary voltage outputs (16) to the primary windings (P1-PN), or to disconnect these connections.

3. The system of claim 2,
**characterized in that** the group of first primary voltage outputs (16) is only connectable to a first group of primary windings (P1-PN), and the group of second primary voltage outputs (16) is only connectable to a second group of primary windings (P1-PN).

4. The system of any one of the preceding claims,
**characterized in that** the second control unit comprises an identification device (38), and the first control unit (14) is connected to at least one acquisition device (41) that is designed to acquire the identification device (38) of a second control unit (36) that is connected to a secondary winding (S1, S2), which together with a primary winding (P1-PN) that is connected to the first control unit (14) forms a transducer.

5. The system of claim 4,
**characterized in that** the operating-mode switching device (32) is equipped, adjusting a predetermined operating mode, to detect all the available identification devices (38) and to update the connections between the primary windings (P1-PN) and the primary voltage output (16).

6. The system of claim 4,
**characterized in that** the identification device (38) is a transponder, and the acquisition device (41) is a reading device for transponders.

7. The system of claim 4,
**characterized in that** the identification device (38) is designed to induce recognizable response behavior in a primary winding (P1-PN), and the first control unit (14) is designed to measure this response behavior.

8. The system of claim 7,
**characterized by** an impedance, a capacitance or a resistance for inducing the recognizable response behavior.

9. The system of claim 4,
**characterized in that** the first control unit (14) is designed at each primary winding (P1-PN) to check whether a transducer with a secondary winding (S1, S2) is formed.

10. The system of claim 4,
**characterized in that** the acquisition device (41) is connected to the operating-mode switching device, and the operating-mode switching device is designed to disconnect the connection to a primary winding (P1-PN) which forms a transducer with a secondary winding (S1, S2) when the acquired identification of a second control unit (36) connected to the secondary winding (S1, S2) differs from a predetermined identification of the then present operating mode.

11. The system of any one of the preceding claims,
**characterized in that** the first control unit (14) is connected to a checking device (22) that is designed to check whether a vehicle-external voltage supply is available.

## Patentansprüche

1. System zur kontaktlosen Energieübertragung zwischen einem ersten Fahrzeugteil (6) und mindestens einem relativ zu dem ersten Fahrzeugteil variabel positionierbaren Abnehmer (10) in einer Passagierkabine eines Fahrzeugs, aufweisend
- eine erste Steuereinheit (14) mit einem Spannungseingang (24, 26) und mindestens einem Primärspannungsausgang (16),
- eine Mehrzahl von an dem ersten Fahrzeugteil positionierbaren Primärwicklungen (P1-PN), die mit dem Primärspannungsausgang (16) der ersten Steuereinheit (14) verbindbar sind,
- eine zweite Steuereinheit (36) mit einem Sekundärspannungseingang,
- eine an dem Abnehmer (10) angeordnete Sekundärwicklung (S2), die mit dem Sekundärspannungseingang der zweiten Steuereinheit (36) verbindbar ist,
wobei der Abnehmer (10) derart relativ zu den Primärwicklungen (P1-PN) positionierbar ist, dass zwischen der Sekundärwicklung (S2) und einer Primärwicklung (P1-PN) ein Übertrager zum Übertragen einer Spannung von der Primärwicklung (P1-PN) in die Sekundärwicklung (S2) gebildet wird,
**dadurch gekennzeichnet, dass** der Abnehmer (10) eine Spannungsbereitstellungseinheit mit einem Anschluss (12) zum Versorgen externer Verbraucher ist und
dass die erste Steuereinheit (14) mit einer Betriebsartenumschalteinrichtung (32) verbunden ist, die dazu eingerichtet ist, beim Betrieb des Fahrzeugs die Verbindung derjenigen Primärwicklungen (P1-PN) zu dem Primärspannungsausgang (16) zu unterbrechen, die einen Übertrager mit einer Sekundärwicklung des Abnehmers (10) bilden.

2. System nach Anspruch 1,
**dadurch gekennzeichnet, dass** die erste Steuereinheit eine Gruppe von ersten Primärspannungsausgängen (16) und eine Gruppe von zweiten Primärspannungsausgängen (16) aufweist, wobei die Betriebsartenumschalteinrichtung (32) einen Betriebsartensignaleingang (34) aufweist und dazu eingerichtet ist, die Gruppe von zweiten Primärspannungsgängen (16) mit den Primärwicklungen (P1-PN) zu verbinden oder diese Verbindung zu unterbrechen.

3. System nach Anspruch 2,
**dadurch gekennzeichnet, dass** die Gruppe von ersten Primärspannungsgängen (16) nur mit einer ersten Gruppe von Primärwicklungen (P1-PN) verbindbar ist und dass die Gruppe von zweiten Primärspannungsgängen (16) nur mit einer zweiten Gruppe von Primärwicklungen (P1-PN) verbindbar ist.

4. System nach einem der vorhergehenden Ansprüche,
**dadurch gekennzeichnet, dass** die zweite Steuereinheit eine Kennzeichnungseinrichtung (38) aufweist und die erste Steuereinheit (14) mit mindestens einer Erfassungseinrichtung (41) verbunden ist, die dazu eingerichtet ist, die Kennzeichnungseinrichtung (38) einer zweiten Steuereinheit (36) zu erfassen, die mit einer Sekundärwicklung (S1, S2) verbunden ist, welche mit einer mit der ersten Steuereinheit (14) verbundenen Primärwicklung (P1-PN) einen Übertrager bildet.

5. System nach Anspruch 4,
**dadurch gekennzeichnet, dass** die Betriebsartenumschalteinrichtung (32) dazu eingerichtet ist, nach Änderung einer vorgegebenen Betriebsart sämtliche verfügbaren Kennzeichnungseinrichtungen (38) zu erkennen und die Verbindungen der Primärwicklungen (P1-PN) mit dem Primärspannungsausgang (16) zu aktualisieren.

6. System nach Anspruch 4,
**dadurch gekennzeichnet, dass** die Kennzeichnungseinrichtung (38) ein Transponder ist und die Erfassungseinrichtung (41) ein Lesegerät für Transponder ist.

7. System nach Anspruch 4,
**dadurch gekennzeichnet, dass** die Kennzeichnungseinrichtung (38) dazu eingerichtet ist, ein erkennbares Antwortverhalten in eine Primärwicklung (P1-PN) zu induzieren und dass die erste Steuereinheit (14) dazu eingerichtet ist, dieses Antwortverhalten zu messen.

8. System nach Anspruch 7,
**gekennzeichnet durch** eine Impedanz, einen Kondensator oder einen Widerstand zum Induzieren des erkennbares Antwortverhaltens.

9. System nach Anspruch 4,
**dadurch gekennzeichnet, dass** die erste Steuereinheit (14) dazu eingerichtet ist, an jeder Primärwicklung (P1-PN) zu prüfen, ob ein Übertrager mit einer Sekundärwicklung (S1, S2) gebildet ist.

10. System nach Anspruch 4,
**dadurch gekennzeichnet, dass** die Erfassungseinrichtung (41) mit der Betriebsartenumschalteinrichtung verbunden ist und die Betriebsartenumschalteinrichtung dazu eingerichtet ist, die Verbindung zu einer Primärwicklung (P1-PN) zu unterbrechen, die mit einer Sekundärwicklung (S1, S2) einen Übertrager bildet, wenn die erfasste Kennzeichnung einer mit der Sekundärwicklung (S1, S2) verbundenen zweiten Steuereinheit (36) von einer vorgegebenen Kennzeichnung einer vorliegenden Betriebsart abweicht.

11. System nach einem der vorhergehenden Ansprüche,
**dadurch gekennzeichnet, dass** die erste Steuereinheit (14) mit einer Prüfeinrichtung (22) verbunden ist, welche dazu eingerichtet ist, zu prüfen, ob eine fahrzeugexterne Spannungsversorgung verfügbar ist.

## Revendications

1. Système de transfert d'énergie sans contact entre une première partie de véhicule (6) et au moins un collecteur (10) qui peut être positionné de façon variable par rapport à la première partie de véhicule dans une cabine passagers d'un véhicule, comprenant :
- une première unité de commande (14) avec une entrée de tension (24, 26) et au moins une sortie de tension primaire (16),
- une multitude d'enroulements primaires (P1-PN) qui peuvent être positionnés sur la première partie de véhicule, lesquels enroulements primaires peuvent être connectés à la sortie de tension primaire (16) de la première unité de commande (14),
- une seconde unité de commande (36) avec une entrée de tension secondaire,
- un enroulement secondaire (S2), agencé sur le collecteur (10), lequel enroulement secondaire (S2) peut être connecté à l'entrée de tension secondaire de la seconde unité de commande (36),
dans lequel le collecteur (10) peut être positionné de telle manière par rapport aux enroulements primaires (P1-PN) qu'entre l'enroulement secondaire (S2) et un enroulement primaire (P1-PN) est formé un transducteur pour transférer une tension de l'enroulement primaire (P1-PN) à l'enroulement secondaire (S2),
**caractérisé en ce que** le collecteur (10) est une unité de fourniture de tension avec une connexion (12) pour fournir des charges externes, et
**en ce que** la première unité de commande (14) peut être connectée à un dispositif de commutation de mode de fonctionnement (32) qui est équipé, lors du fonctionnement du véhicule, pour interrompre la connexion entre lesdits enroulements primaires (P1-PN) et la sortie de tension primaire (16) qui forment un transducteur avec un enroulement secondaire du collecteur (10).

2. Système selon la revendication 1,
**caractérisé en ce que** la première unité de commande comprend un groupe de premières sorties de tension primaire (16) et un groupe de secondes sorties de tension primaire (16), dans lequel le dispositif de commutation de mode de fonctionnement (32) comprend une entrée de signal de mode de fonctionnement (34) et est conçu pour connecter le groupe de secondes sorties de tension primaire (16) aux enroulements primaires (P1-PN), ou pour déconnecter ces connexions.

3. Système selon la revendication 2,
**caractérisé en ce que** le groupe de premières sorties de tension primaire (16) ne peut être connecté qu'à un premier groupe d'enroulements primaires (P1-PN), et le groupe de secondes sorties de tension primaire (16) ne peut être connecté qu'à un second groupe d'enroulements primaires (P1-PN).

4. Système selon l'une quelconque des revendications précédentes,
**caractérisé en ce que** la seconde unité de commande comprend un dispositif d'identification (38), et la première unité de commande (14) est connectée à au moins un dispositif d'acquisition (41) qui est conçu pour acquérir le dispositif d'identification (38) d'une seconde unité de commande (36) qui est connectée à un enroulement secondaire (S1, S2), qui, conjointement avec un enroulement primaire (P1-PN) qui est connecté à la première unité de commande (14), forme un transducteur.

5. Système selon la revendication 4,
**caractérisé en ce que** le dispositif de commutation de mode de fonctionnement (32) est équipé, en réglant un mode de fonctionnement prédéterminé, pour détecter tous les dispositifs d'identification disponibles (38) et pour mettre à jour les connexions entre les enroulements primaires (P1-PN) et la sortie de tension primaire (16).

6. Système selon la revendication 4,
**caractérisé en ce que** le dispositif d'identification (38) est un transpondeur, et le dispositif d'acquisition (41) est un dispositif de lecture pour transpondeurs.

7. Système selon la revendication 4,
**caractérisé en ce que** le dispositif d'identification (38) est conçu pour induire un comportement de réponse reconnaissable dans un enroulement primaire (P1-PN), et la première unité de commande (14) est conçue pour mesurer ce comportement de réponse.

8. Système selon la revendication 7,
**caractérisé par** une impédance, une capacité ou une résistance pour induire le comportement de réponse reconnaissable.

9. Système selon la revendication 4,
**caractérisé en ce que** la première unité de commande (14) est conçue au niveau de chaque enroulement primaire (P1-PN) pour vérifier si un transducteur avec un enroulement secondaire (S1, S2) est formé.

10. Système selon la revendication 4,
**caractérisé en ce que** le dispositif d'acquisition (41) est connecté au dispositif de commutation de mode de fonctionnement, et le dispositif de commutation de mode de fonctionnement est conçu pour déconnecter la connexion à un enroulement primaire (P1-PN) qui forme un transducteur avec un enroulement secondaire (S1, S2) lorsque l'identification acquise d'une seconde unité de commande (36) connectée à l'enroulement secondaire (S1, S2) diffère d'une identification prédéterminée du mode de fonctionnement alors présent.

11. Système selon l'une quelconque des revendications précédentes,
**caractérisé en ce que** la première unité de commande (14) est connectée à un dispositif de vérification (22) qui est conçu pour vérifier si une source de tension externe au véhicule est disponible.
